# EUROPEAN PATENT APPLICATION

(11) **EP 3 179 177 A1**
(43) Date of publication of application: **14.06.2017**
(21) Application number: 15382612.8
(22) Date of filing: 07.12.2015
(51) Int. Cl.: F24J 2/16, F24J 2/52, F24J 2/54

(54) **HELIOSTAT WITH AN IMPROVED STRUCTURE**

(71) Applicant: Carrascosa Perez, Marco Antonio, 28320 Pinto (Madrid) (ES)
(72) Inventor: Carrascosa Perez, Marco Antonio, 28320 Pinto (Madrid) (ES)
(74) Representative: Temiño Ceniceros, Ignacio

(57) **Abstract**

Heliostat with dual-axis tracking capacity, comprising: a pedestal (1); a torque tube (2); a plurality of arms (9) to which a plurality of facets (11) configuring the heliostat grid is fixed; an azimuth drive (3) of the torque tube (2) arranged in the pedestal (1); a horizontal support (4) arranged at the upper end of the pedestal (1), connected with the torque tube (2) through cooperating zenith pivots (5) and zenith lugs (8), connected by hinge pins (20); and a zenith drive (7) of the torque tube (2), connected in a pivoting manner to the horizontal support (4) and to said torque tube (2) by means of a zenith anchor (6) and/or lugs (8). Advantageously, said heliostat comprises an anti-astigmatism system, made up of a lattice system attaching consecutive arms (9) of the heliostat, reinforcing the heliostat grid support; and a structural reinforcement of the torque tube (2) comprising a central support (17) which is projected from the center of said torque tube (2); and wherein the end of said central support (17) is finished with two or more front tie rods (18).

## Description

### TECHNICAL FIELD

The present invention is comprised within those technologies relating to solar trackers used in generating solar concentration energy and, particularly, to solar trackers with dual-axis tracking, such as the heliostats used in solar tower technology.

### PRIOR ART

Since their emergence, the main objective of techniques for using solar energy have been to increase the intensity of solar radiation that is captured for its subsequent utilization. Initially, said increase was provided intuitively by means of trial and error methods. Nevertheless, this technical problem was later approached from a scientific standpoint, giving rise to systems with greater concentration of solar radiation striking capture structures, thereby allowing more efficient thermal conversions according to the principles of thermodynamics.

Central tower solar concentrator technologies consist of a solar field conventionally made up of structures with multiple individual mirrors, configuring a large spherical cap or paraboloid, at the focus of which the fixed receiver is located. By means of this distribution, the solar radiation striking the reflectors tracking the movement of the sun, referred to as heliostats, is concentrated and focused on a receiver located at the top of the tower. The receiver thereby absorbs the received radiation and transfers it, in the form of thermal energy, to a carrier fluid, referred to as heat transfer fluid, to either be used directly in the corresponding thermal or thermodynamic process, or else to be stored as thermal energy, to be used at a later time.

As a general rule, the heliostats forming the solar field or collector subsystem have dual-axis tracking capacity, designated as azimuth axis or axis of rotation, and zenith axis or axis of inclination with respect to the horizontal. The freedom of movement both axes thereby assures that the reflected radiation reflected strikes the area suitable of the receiver, regardless of the position of the sun. In turn, the precise aiming of the reflected radiation depends on the relative position of the reflective surface and on the incident radiation, for the purpose of further concentrating radiation in the receiver. In this context, a minor angular error in the inclination of the reflective surfaces translates into a deviation corresponding of the reflected beam, which depends on the distance to the receiver and on said angular error.

In addition, insufficient structural rigidity or excessive play entails deviation from the point focal where solar radiation is concentrated with respect to the region where it is intended to be concentrated. It must be taken into account that the main technical purpose of heliostats is to generate a focus with the heliostat to concentrate the maximum reflected energy possible in the receiver.

For the purpose of reducing the errors in concentration systems, the prior art comprises various heliostats designs having different characteristics, as illustrated by the following references:
Patent application ES 210567 A1 (CNRS) consists of a rocker arm heliostat counterweighted with hydraulic actuators giving it dual-axis tracking capacity. However, this movement capacity is reduced due to heliostat kinematics limitations. Furthermore, said heliostat is not suitable for use on large-sized reflection surfaces, due to the strokes of the hydraulic drives or the sizing of the rods and pins, as the supports are positioned therebetween. By increasing the reflective surface, this entails reducing the aiming precision of the heliostat, with the corresponding output loss.

Utility model ES 245227 U (Westinghouse Electric Corporation) discloses a belt-operated heliostat on rollers. The reflective panels of the heliostat are factory premounted. This heliostat configuration is not suitable either for being applied in large reflective surfaces, given that the cost of manufacturing said tracks with the necessary precision would be too high, which is compounded by the difficulty of suitably assembling, positioning and edging the prefabricated reflective panels on site. Furthermore, creep of the movement system, which would increase the heliostat aiming error, must be considered.

Utility model ES 281691 U (M-B-B GMBH) discloses a dual-grid heliostat in which the prefabricated facets are fixed to a frame with a clamp anchor. The facets have three anchoring points to make the edging thereof easier.

Patent application ES 439605 A1 (F. Briones) discloses a series of floating heliostats with a common or an individual floater, having dual-axis tracking capacity by means of the actual flotation for the azimuth axis and by means of servomotors or cables for the zenith movement.

Patent application ES 465973 A1 (Sener Ingeniería y Sistemas) discloses a heliostat with an inclined main bearing column, with the drives inside the casing, supported on three shoes. This column in turn bears a plurality of secondary supports with zenith rotation capacity. This design has the possibility of being braced to the ground by means of traction cables to provide it with greater stability.

Patent application ES 473356 A1 (Sener Ingeniería y Sistemas) discloses a heliostat supported on a pedestal, the head of which has azimuth rotation capacity by means of a harmonic gearing and torque limiters, and the grid can tilt 180º due to the use of a linear zenith drive and an articulated quadrilateral with sides having a constant length.

Patent application ES 8100499 A1 (Construcciones Aeronáuticas S.A.) discloses a heliostat with a pedestal and two torque tubes, configured in the form of a cross, with a monoblock gear box providing it with movement by means of gears. The torque tubes supports a plurality of trusses on which the facets are anchored.

Patent application WO 8803635 A1 (Martin Marietta Corp.) discloses a torque tube heliostat on a pedestal and lattice grid, comprising the presence of wind spoilers along the perimeter thereof.

Patent document US 4459972 (W. T. Moore) relates to a heliostat with dual-axis tracking capacity and a reflective surface with two different radii of curvature along the main axes of the facets.

Patent application BR PI 0902803 A2 (M. H. Bastos) relates to an independent heliostat with integrated sensors. This heliostat has 22 integrated sensors and 2 integrated transducers for the purpose of using the reflected light to detect the position of the grid and to aim at the receiver.

Patent application WO 2011072449 A1 (C. Wang) discloses a heliostat with a sensor above the mirrors in a support going through the grid and linear drives. The arm going through the mirrored surface is only used to support the position sensor.

Patent application WO 2012139169 A1 (Heliosystems PTY, LTD.) discloses a heliostat with a curvature induced in the reflective surface by mechanical means, by means of cables and pulleys which curve the grid in a variable manner depending on the position of the sun. The tracking systems are pinion-gear mechanisms.

Patent application WO 2012117142 A1 (Abengoa Solar New Technologies S.A.) discloses a heliostat characterized by having the azimuth drive at the base, fixed to the ground. The pedestal is fixed to the moving part of this drive, through an opening.

Patent application EP 2450644 A1 (D. Tommei) discloses a heliostat with a pinion-gear system in both drives, equipped with photosensitive detectors in the front part to detect the position of the sun.

Patent application WO 2013178850 A1 (Abengoa Solar New Technologies S.A.) discloses a heliostat with hydraulic azimuth drive, with a cowl with side openings through which the two linear drives enter. Said drives are not coplanar and are attached to the same rotating shaft of the actuators.

Patent application WO 2010022027 A2 (PWR, Inc.) discloses a heliostat with a zenith and azimuth angle of rotation of more than 90º, based on the use of an articulated joint with perpendicular axes.

Patent application WO 2011080270 A2 (Lehle Gmbh) discloses a pedestal-type heliostat with a rotary beam, with hydraulic linear drives for azimuth and zenith movements.

Patent application US 2010/0180884 A1 (K. Oosting) discloses a heliostat with a central post with a pivoting point at the upper end thereof and two linear actuators anchored to the grid and to the ground.

The prior art described in the paragraphs above has some drawbacks affecting the optical quality and heliostat performance as a whole, among which the technical problems described below stand out.

Heliostats are dual-axis solar trackers which usually have a range of movement of 360º in azimuth (it rotates completely in the horizontal plane), whereas in elevation or inclination of the grid they can usually move between -10º and 90º, the position of 0º being the horizontal position of the grid and 90º being its completely vertical position. Due to the continuous variation of the position of the grid and the weather conditions at the site, the loads due to gravity and external causes, such as the wind, continuously vary in magnitude and direction with respect to the reflective surface of the heliostat. This means that the deformations induced in the structure are not only but that they vary throughout the day, rendering compensation for deformations when mounting the structure rather impractical.

Therefore, if the edging of the heliostat is done with the grid at 0º, by changing the direction of the loads due to the weight itself, the deformations existing at the time edging is performed are reduced in the direction that is normal to the reflective surface, whereas they are increased in the same plane as said reflective surface. In other words, the apparent curvature of the surface of the heliostat (edging) varies with the bending of structural elements, such as the torque tube, which occurs in the direction in which they are stressed, instead of in the direction perpendicular to the reflective surface.

Furthermore, variable wind conditions and load direction cause play in the system, allowing minor variables shifting generating angular aiming errors.

The present invention is presented as a technical solution that improves known systems and addresses their associated problems by means of including different structural elements which, on one hand, reinforce the heliostat with respect to bending loads due to gravity or wind, and on the other hand improve aiming precision by means of reducing play in the connection between the pedestal and the torque tube.

### DISCLOSURE OF THE INVENTION

The heliostat object of the invention is a heliostat having a large surface, preferably between 120 and 210 m², with a torque tube-type configuration with dual-axis tracking capacity, characterized by an assembly of structural elements particularly designed to improve and correct the problems from the prior art mentioned in the preceding section.

Said heliostat preferably comprises the following elements:
- a pedestal;
- a torque tube;
- a plurality of arms fixed to the torque tube, arranged transverse thereto;
- a plurality of facets fixed to the arms through a plurality of anchoring points, configuring the heliostat grid;
- an azimuth drive of the grid arranged in the pedestal;
- a horizontal support arranged at the upper end of the pedestal, connected with the torque tube through cooperating zenith pivots and zenith lugs, connected by hinge pins; and
- a zenith drive of the grid, connected in a pivoting manner to the horizontal support and to the torque tube by means of lugs and/or a zenith anchor.

Advantageously, the heliostat of the invention also comprises an anti-astigmatism system, made up of a lattice configuration connecting consecutive arms of the heliostat by means of structural elements arranged parallel or oblique to the axis of the torque tube, reinforcing the heliostat grid support. Said anti-astigmatism system consists of a structural configuration reinforcing the rear part of the reflective surface of the heliostat, minimizing the deformation of the reflected solar spot due to the bending of the torque tube in the plane parallel to the reflective surface when the inclination of the facet grid is increased.

In a preferred embodiment of the invention, the structural elements of the anti-astigmatism system comprise pre-stressed cables or bars arranged parallel to the torque tube. Alternatively or complementarily, the structural elements of the anti-astigmatism system can be arranged oblique to the torque tube.

In another preferred embodiment of the invention, the structural elements of the anti-astigmatism system are arranged in pairs parallel to one another, connecting consecutive arms.

In another preferred embodiment of the invention, the anti-astigmatism system comprises an arrangement of structural elements forming a closed geometry, surrounding the connection between the pedestal and the torque tube such that it envelops the same.

This anti-astigmatism system is also applicable to other trackers which, instead of the azimuth and zenith drive system, have other tracking systems, such as polar axes.

Additionally, the heliostat of the invention includes a structural element of the torque tube with respect to bending loads due to gravity or wind, comprising a central support which is projected from the center of said torque tube, perpendicular to the heliostat grid, in the direction normal to the reflective surfaces of said grid. The end of said central support is finished at the ends with one or more pairs of front tie rods, the opposing ends of which are attached to the torque tube, on both sides thereof. Preferably, these front tie rods are rigid structural profiles or bars.

The front tie rods reduce bending of the torque tube in the direction perpendicular to the reflective surface of the heliostat, which is responsible for the variation in apparent curvature of the grid. It should be pointed out that the bending of the torque tube in this direction depends on the inclination of the grid and on wind loads, so this system favors reducing the variation in heliostat performance throughout the day.

In another preferred embodiment of the invention, the pivoting connections of the zenith drive of the torque tube and/or of the horizontal support with the lugs and/or with the zenith anchor, comprise a play reducing device for fixing the hinge pin of said connections, where said play reducing device comprises a clamping support, integrally incorporated in the zenith lugs, provided with through holes to which a mechanical pulling element, intended for being arranged as a clamp around the hinge pins, is connected. More preferably, the mechanical pulling element comprises a metal arch with threading at the ends thereof, which can be tightened by means of fastening elements. This play reducing device is applicable to any configuration of moving attachments having rotating shafts, both in pivoting attachments of the heliostat of the invention, and in any other moving attachments present in other solar energy capture structures, such as solar trackers, solar collectors or photovoltaic generation structures.

To provide gentle rotation of the pivoting connections of the invention, the hinge pin of said connections preferably comprises a bearing, a ball bearing system or a ball and socket joint. A heliostat with high aiming precision and low consumption due to the easy rotation on the pivoting pins is obtained by means of this system.

This system is particularly conceived to reduce play of the heliostat, improving its aiming precision, in turn reducing the cost thereof, since it only requires manufacturing tolerances that can be easily obtained in mass industrial production. In large solar plants with tower technology, it must be taken into account that heliostats can be located at more than 1000m away from the receiver, so a minor angular error entails a linear distance that can cause heliostat aiming to be at such a distance that it does not correctly strike the receiver or the reflected energy is excessive, lowering the output thereof.

In a preferred embodiment of the invention, the heliostat comprises a control cabinet equipped with the control electronics of said heliostat and electric power supply connections thereof, said control cabinet being arranged in the pedestal.

In another preferred embodiment of the invention, the arms comprise a plurality of anchoring flanges for anchoring to the facets by means of fasteners, for fixing thereof to anchoring supports of said facets.

In another preferred embodiment of the invention, the anchoring flanges are arranged in groups of four to allow the simultaneous fixing of four facets.

Therefore, the functional features of the design object of the present invention solve problems in the prior art in this technology, increasing heliostat performance and, hence, global output of the solar thermal installation.

### DESCRIPTION OF THE DRAWINGS

Figure 1 shows a general view of the rear part of the heliostat, in which the main structural elements thereof can be seen.
Figure 2 shows a front view of the heliostat in which the main elements of the structural element of the torque tube are depicted.
Figure 3 shows a detail of the distribution of the anchors of the reflectors.
Figure 4 shows an enlarged view of Figure 3.
Figures 5 and 6 show respective views of the heliostat support and movement system, including the fixing of the torque tube to the pedestal, by means of pivoting connections.
Figure 7 shows a view of the play reducing device of the invention, applied in a zenith pivot.
Figure 8 shows a section view of the play reducing device of the invention, in a pin configuration equipped with bearing.
Figure 9 shows a section view of the play reducing device of the invention, in a pin configuration equipped with an internal ball and socket joint.

The reference numbers shown in the drawings are the following:

| | |
|---|---|
| (1) | Pedestal |
| (1') | Control cabinet |
| (2) | Torque tube |
| (3) | Azimuth drive |
| (4) | Horizontal support or table |
| (5) | Zenith pivots |
| (6) | Zenith anchor |
| (7) | Zenith drive |
| (8) | Zenith lugs |
| (9) | Arms |
| (10) | Facet anchoring points |
| (11) | Facets |
| (12) | Shared anchors of the arms |
| (13) | Anchoring flanges for anchoring to facets |
| (14) | Fasteners of the facet |
| (15) | Anchoring support of the facets |
| (16) | Structural elements of the anti-astigmatism system |
| (17) | Central support |
| (18) | Front tie rods |
| (19) | Play reducing device |
| (20) | Hinge pin |
| (21) | Clamping support |
| (22) | Mechanical pulling element |
| (23) | Fasteners |
| (24) | Bearing |
| (25) | Ball and socket joint |

### DETAILED DISCLOSURE OF THE INVENTION

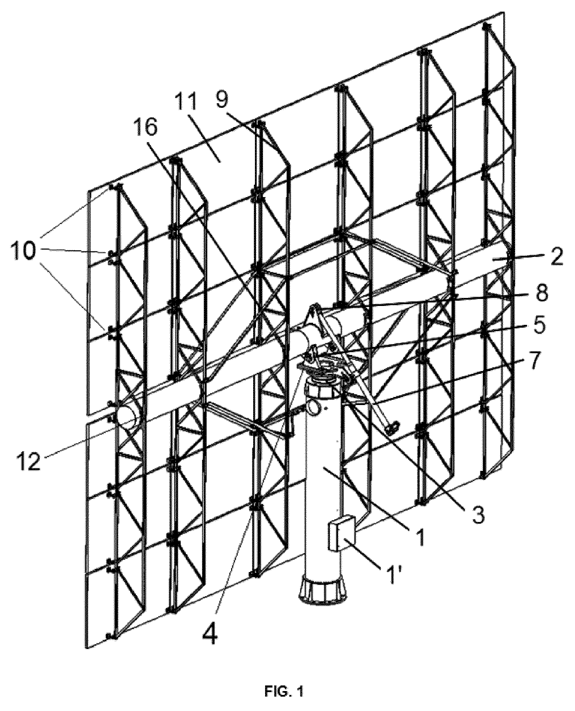

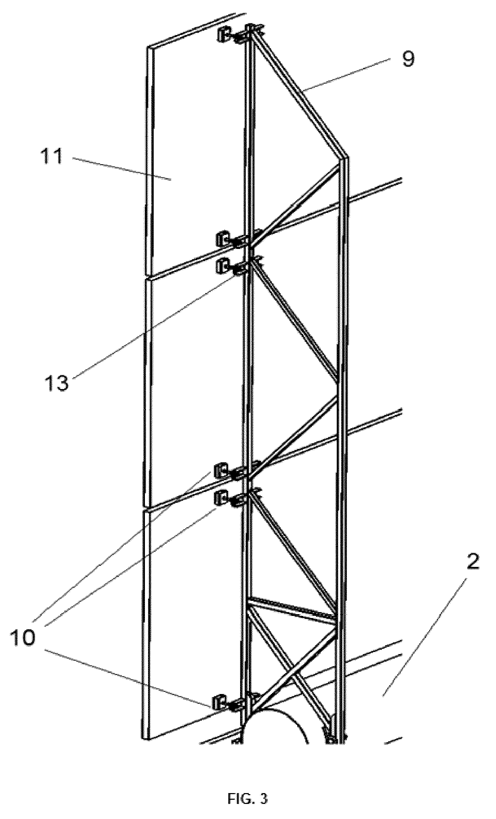

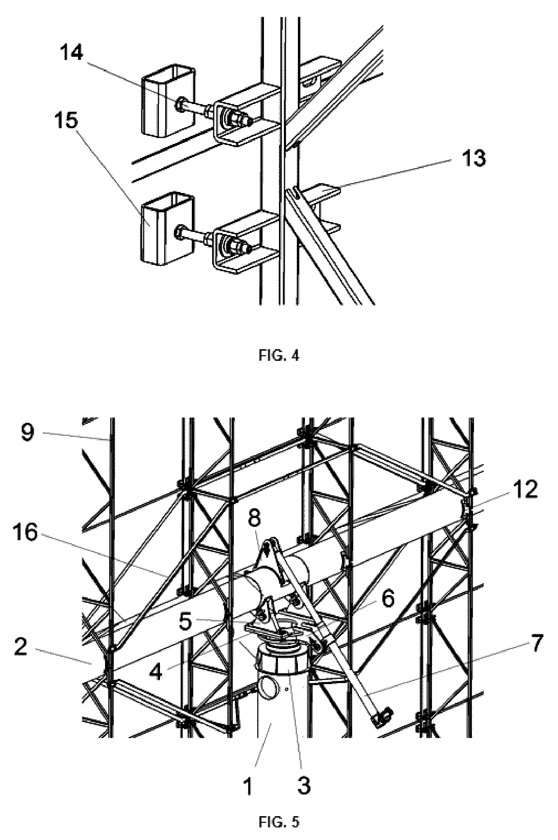

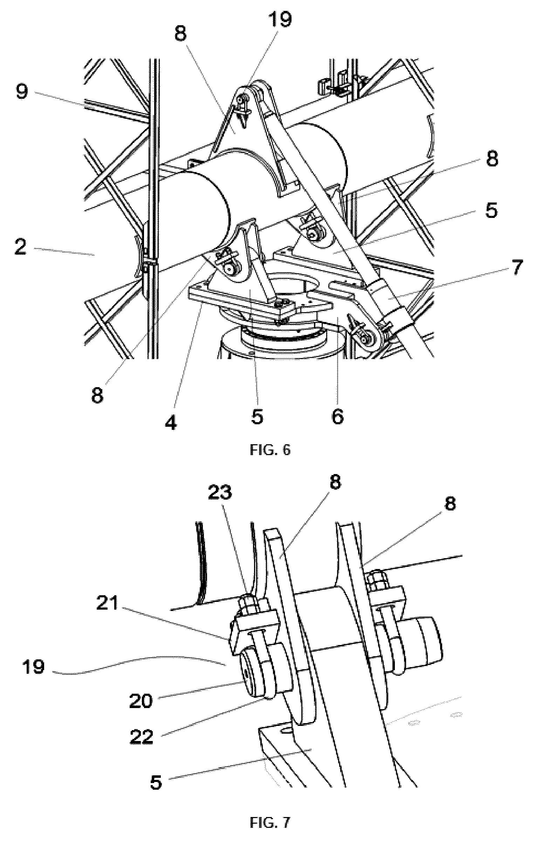

Different preferred embodiments of the invention, provided for illustrating but nonlimiting purposes, are described below, making reference to Figures 1-9 of the present document.

The heliostat object of the invention is a heliostat having a large surface, preferably between 120 and 210 m², with a configuration formed by a pedestal (1) and a torque tube (2) with dual-axis tracking capacity, characterized by an assembly of structural elements particularly designed to improve and correct the technical problems described in the prior art section of the present application.

The pedestal (1) of the heliostat of the invention has a primarily structural function, being fixed to the foundation in the ground. Said pedestal (1) also preferably incorporates a control cabinet (1') in which the control electronics of the heliostat and the electric power supply connections are located. In the upper part of the pedestal (1), the heliostat also comprises an azimuth drive (3) to provide rotation thereof about the vertical axis parallel to that of the pedestal (1). The azimuth drive is preferably an electromechanical system, although use of other systems, such as a hydraulic system, is not excluded.

Fixed to the area upper of the azimuth drive (3) there is horizontal support element or table (4). This structural element contains the substructure on which the heliostat pivots in the zenith or elevation direction, connecting the pedestal (1) with the torque tube (2). Preferably, said connection is performed by means of a plurality of zenith pivots (5) and a zenith anchor (6) which is also connected to a zenith drive (7) for regulating the zenith angle or height of the heliostat, parallel to the torque tube. Said zenith drive (7) is preferably a linear electromechanical and/or hydraulic drive.

To provide the height tracking capacity of the heliostat, the zenith drive (7) is fixed to the torque tube (2), preferably by means of a plurality of zenith lugs (8). Therefore, by varying the linear length of the zenith drive (7), the distance between the zenith anchor (6) and the zenith lugs (8) is varied, the variation in inclination of the grid thereof being induced in the heliostat (that is, of the assembly of the reflective surfaces thereof) by means of rotation on the points of rotation located in the zenith pivots (5).

The torque tube (2) in turn supports a plurality of arms (9) preferably arranged perpendicular to said torque tube (2), and containing the anchoring points (10) of the facets (11) forming the heliostat grid.

The arms (9) are connected with the torque tube (2) and are arranged on both sides thereof, being fixed by means of shared anchors (12) arranged for that purpose, balancing the reactions of the torque tube (2) with respect to longitudinal loads of the arms (9).

The arms (9) also preferably have a plurality of anchoring flanges (13) where, with the help of the fasteners (14) of each facet (11), they are fixed to an anchoring support (15) of said facets (11). These anchoring flanges (13) are preferably arranged in groups of four for the purpose of allowing the simultaneous fixing of four facets (11).

In addition to the features described in detail in the preceding paragraphs, the heliostat object of the present invention furthermore has structural elements that are particularly conceived to improve output with respect to the heliostats of the prior art. Said elements can be used individually or in combination, being applied to a heliostat, given that each of them provides complementary structural advantages which improve, by themselves, the output and aiming precision of said heliostat.

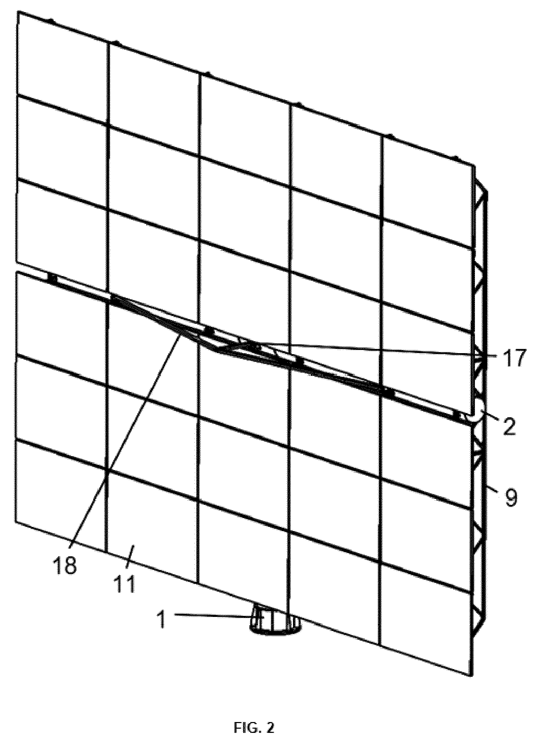

The first of these elements is an anti-astigmatism system. Said system comprises a lattice configuration attaching the arms (9) of the heliostat, such that it minimizes deformation of the reflected solar spot due to the bending of the torque tube (2) by increasing inclination of the grid. The reinforcement is formed by structural bars (16) connecting consecutive arms (9). Said bars are arranged parallel to the torque tube (2) or oblique thereto, individually or in pairs parallel to one another. Preferably, the anti-astigmatism system comprises an arrangement of structural bars (16) surrounding the connection between the pedestal (1) and the torque tube (2), such that it envelops same (as shown, for example, in the configuration of Figure 2), although other arrangements are likewise possible in the scope of the invention.

Another one of the characteristic structural elements proposed by the present invention, which is an improvement with respect to the prior art of this technology, is a structural configuration based on a central support (17) which is projected from the center of the torque tube (2), perpendicular to the heliostat grid in the direction normal to the reflective surfaces of said grid. The end of said central support (17) is finished at the ends with two front tie rods (18), the opposing ends of which are attached to the torque tube (2) on opposite sides thereof. Preferably, said front tie rods (18) are rigid structural profiles or bars.

These tie rods (18) reduce bending of the torque tube in the direction perpendicular to the reflective surface formed by the facets (11), which is responsible for the variation in apparent curvature of the grid and, hence, the variation in focal distance of the heliostat. It should be pointed out that the bending of the torque tube (2) in this direction depends on the inclination of the grid and on wind loads, so this system favors reducing the variation in heliostat performance throughout the day, as it works in both directions in the bending plane.

Another characteristic structural element proposed by the present invention is a play reducing device (19), particularly conceived to reduce play of the heliostat in the connections between the horizontal support or table (4) and the torque tube (2), improving its aiming precision and in turn reducing the cost thereof, since it only requires manufacturing tolerances that can be easily obtained in mass industrial production. In large solar plants with tower technology, heliostats can be located at more than 1000m away from the receiver, so a minor angular error entails a linear distance that can cause heliostat aiming to be at such a distance that it does not correctly strike the receiver or the reflected energy is excessive, lowering the output thereof.

The play reducing device (19) of the invention is preferably applied to the hinge pins (20) connecting the zenith pivots (5) or the zenith drive (7), with their respective zenith lugs (8). Said device (19) preferably comprises a clamping support (21), integrally incorporated in the zenith lugs (8), provided with through holes to which a mechanical pulling element, intended for being arranged as a clamp around the hinge pins (20), is connected. Said mechanical pulling element (22) can be, for example, a metal arch with threading at the ends thereof, which can be tightened with the aid of fastening elements (23), such as a nut and counter nut assembly. This mechanical pulling element (22) secures and pulls the hinge pin (20) towards the support (21), eliminating the play existing between the pin (20) and the corresponding housing gaps thereof arranged in the zenith lugs (8), and allowing the rotation of said hinge pin (20) with respect to the zenith pivots (5) without play. The play reducing device (19) has this same operation regardless of the location of the pin, and particularly in the anchoring pins of the zenith drive (7).

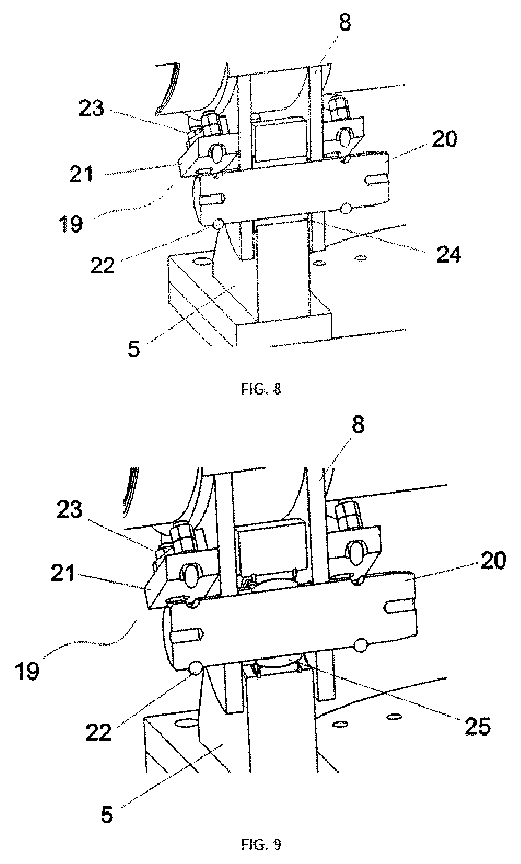

To make the pivoting movement between the zenith lugs (8) and their corresponding pivots (5) or drives (7) easier, the hinge pin (20) is equipped with a bearing (24) (Figure 8) or with a ball and socket joint (25) (Figure 9) inside the articulation pivoting. Use of these elements reduces coaxiality tolerances of the pins, since it allows compensating for the misalignment of the housing gaps for the zenith lugs (8) in turn performing gentle and low-consumption rotation.

The play reducing device (19) proposed by the invention can be present in one or in all the moving attachments of the heliostat pivoting about an axis. Preferably, said pivoting attachments must be assembled in the solar field for the purpose of reducing play of these attachments, being adapted to actual working conditions. Similarly, the play reducing device (19) can be applied to attachments with shafts, such as the attachments of the drives of polar heliostats, the rotating shafts of which do not correspond to the azimuth and zenith directions but are inclined with respect to same, or even the attachments of the drives in solar tracking systems of parabolic trough collectors.

The combined use of the play reducing device (19), of the anti-astigmatism system and of the front tie rods (18) allows the heliostat to maintain its aiming precision, the size and shape of the reflected solar image and resistance thereof to bending loads, even integrating a large reflective surface, for example between 120 and 210 m², with a simpler manufacture and high performance.

## Claims

1. A heliostat with dual-axis tracking capacity, of the type comprising:
- a pedestal (1);
- a torque tube (2);
- a plurality of arms (9) fixed to the torque tube (2), arranged transverse thereto;
- a plurality of facets (11) fixed to the arms (9) through a plurality of anchoring points (10), configuring the reflective heliostat grid;
- an azimuth drive (3) of the torque tube (2) arranged in the pedestal (1);
- a horizontal support or table (4) arranged at the upper end of the pedestal (1), connected with the torque tube (2) through cooperating zenith pivots (5) and zenith lugs (8), connected by hinge pins (20);
- a zenith drive (7) of the torque tube (2), connected in a pivoting manner to the horizontal support (4) and to said torque tube (2) by means of lugs (8) and/or a zenith anchor (6);
**characterized in that** it comprises at least one of the following structural elements:
- an anti-astigmatism system made up of a lattice configuration connecting consecutive arms (9) of the heliostat by means of structural elements (16) arranged parallel or oblique to the axis of the torque tube, reinforcing the heliostat grid support;
- a structural reinforcement of the torque tube (2) comprising a central support (17) which is projected from the center of said torque tube (2) perpendicular to the heliostat grid, in the direction normal to the reflective surfaces of said grid, and wherein the end of said central support (17) is finished at the ends with one or more pairs of front tie rods (18), the opposing ends of which are attached to the torque tube (2), on both sides thereof.

2. The heliostat according to the preceding claim, wherein the pivoting connections of the zenith drive (7) of the torque tube (2) and/or of the horizontal support (4) with the lugs (8) and/or with the zenith anchor (6), comprise a play reducing device (19) for fixing a hinge pin (20) to said connections, wherein said play reducing device (19) comprises a clamping support (21), integrally incorporated in the zenith lugs (8), provided with through holes, to which a mechanical pulling element, arranged as a clamp around the hinge pins (20), is connected.

3. The heliostat according to the preceding claim, wherein the mechanical pulling element (22) comprises a metal arch with threading at the ends thereof, which can be tightened means of fastening elements (23).

4. The heliostat according to any of claims 2-3, wherein the hinge pin (20) comprises a bearing (24) or a ball and socket joint (25).

5. The heliostat according to any of the preceding claims, wherein the front tie rods (18) for the structural reinforcement of the torque tube (2) are rigid structural profiles or bars.

6. The heliostat according to any of the preceding claims, wherein the structural elements (16) of the anti-astigmatism system comprise pre-stressed cables or bars arranged parallel to the torque tube (2).

7. The heliostat according to any of the preceding claims, wherein the structural elements (16) of the anti-astigmatism system comprise pre-stressed cables or bars arranged oblique to the torque tube (2).

8. The heliostat according to any of the preceding claims, wherein the structural elements (16) of the anti-astigmatism system are arranged in pairs parallel to one another, connecting consecutive arms (9).

9. The heliostat according to any of the preceding claims, wherein the anti-astigmatism system comprises an arrangement of structural elements (16) forming a closed geometry, surrounding the connection between the pedestal (1) and the torque tube (2) such that it envelops same.

10. The heliostat according to any of the preceding claims, comprising a control cabinet (1') equipped with the control electronics of said heliostat and electric power supply connections thereof, said control cabinet (1') being arranged in the pedestal (1).

11. The heliostat according to any of the preceding claims, wherein the arms (9) comprise a plurality of anchoring flanges (13) for anchoring to the facets (10) by means of fasteners (14), for fixing thereof to anchoring supports (15) of said facets (10).

12. The heliostat according to the preceding claim, wherein the anchoring flanges (13) are arranged in groups of four for the simultaneous fixing of four facets (11).
